# EUROPÄISCHE PATENTSCHRIFT

(11) **EP 2 747 049 B1**
(45) Veröffentlichungstag und Bekanntmachung des Hinweises auf die Patenterteilung: **12.04.2017**
(21) Anmeldenummer: 13005931.4
(22) Anmeldetag: 19.12.2013
(51) Int. Cl.: G01D 21/00, G01F 1/32, G05F 1/625

(54) **Messanordnung zur Bestimmung einer Messgröße und Verfahren zur Erzeugung eines Ausgangssignals**
Measuring assembly for the determination of a measurement value and method for generating an output signal
Système de mesure pour la détermination d'une grandeur de mesure et procédé de génération d'un signal de sortie

(30) Priorität: 20.12.2012 DE 102012024893
(43) Veröffentlichungstag der Anmeldung: 25.06.2014
(73) Patentinhaber: Krohne Messtechnik GmbH, 47058 Duisburg (DE)
(72) Erfinder: Kolonko, Christian, 46145 Oberhausen (DE); Dymek, Steffen, 46147 Oberhausen (DE); van der Linde, Martin, 46147 Oberhausen (DE)
(74) Vertreter: Gesthuysen Patent- und Rechtsanwälte

(56) Entgegenhaltungen:
- EP-A2- 1 530 408
- WO-A2-2004/023081
- DE-A1- 4 006 751
- DE-A1- 19 531 899
- DE-A1-102005 047 894
- DE-A1-102010 035 612

## Beschreibung

Die Erfindung betrifft eine Messanordnung zur Bestimmung mindestens einer Messgröße mit mindestens einer Sensorvorrichtung und mindestens einem Signalausgang zur Ausgabe mindestens eines Ausgangssignals, wobei das Ausgangssignal mindestens durch einen vorgebbaren Wert der Stromstärke eine Information über die Messgröße und/oder einen Zustand der Messanordnung überträgt. Bei der Messgröße handelt es sich beispielsweise um den Durchfluss, den Füllstand, den pH-Wert oder die Temperatur eines Mediums. Weiterhin bezieht sich die Erfindung auf ein Verfahren zur Erzeugung eines Ausgangssignals, wobei mindestens durch einen Wert der Stromstärke des Ausgangssignals mindestens eine Information über eine Messgröße und/oder einen Zustand einer Messanordnung übertragen wird. Der Wert der Stromstärke ist insbesondere beispielsweise der halbe Spitze-Spitze-Wert.

In der modernen Prozessautomatisierung werden unterschiedliche Messgeräte - eine alternative Bezeichnung ist Feldgerät - zur Bestimmung oder zur Überwachung von Messgrößen eingesetzt, um Prozesse zu überwachen oder zu steuern. Aus der Schrift DE102007035710 ist ein Messumformer und Stellungsregler bekannt.

Für gefährliche oder sicherheitskritische Anwendungen müssen die Messgeräte - oder als allgemeine Bezeichnung: Messanordnungen, die ggf. auch eine Zusammenschaltung von separaten Komponenten für eine Messung umfassen - ein erhöhtes Maß an Sicherheit erfüllen. Umgekehrt formuliert müssen die Messgeräte ein gewisses Maß an Zuverlässigkeit bieten, was im Allgemeinen über die Sicherheitsanforderungsstufe oder den Sicherheits-Integritätslevel (SIL) beschrieben wird. Dabei muss mit höherer Stufe das Risiko einer Fehlfunktion weiter minimiert werden. Für eine Erkennung eines Fehlerzustands werden entsprechende Messgeräte mit einer Funktionalität ausgestattet, die der Überwachung einzelner Komponenten oder des gesamten Messgeräts dienen.

Wird ein Fehler erkannt, so wird dies zum einen - insbesondere über ein entsprechendes Fehlersignal - signalisiert und zum anderen wechseln die Messgeräte - insbesondere bei kritischen Fehlern - zumeist in einen abgesicherten Zustand.

Eine Messanordnung verfügt generell wenigstens über eine Sensorvorrichtung, die der Bestimmung der jeweiligen Messgröße oder sogar mehrerer Messgrößen dient, und mindestens einen Signalausgang zur Ausgabe eines Ausgangssignals. Die Sensorvorrichtung erzeugt ausgehend von einer Messung ein Messsignal, das beispielsweise direkt über den Signalausgang ausgegeben wird oder das in der Messanordnung verarbeitet oder wenigstens teilweise aufbereitet wird. Die Verarbeitung kann beispielsweise bedeuten, dass mit hinterlegten Kalibrationsdaten aus dem Messsignal der eigentlich interessierende Wert einer Prozessgröße berechnet wird. Ist beispielsweise das Messsignal die Laufzeit eines Mikrowellensignals eines Füllstandmessgeräts nach dem Radar-Prinzip, so kann über Referenzdaten - insbesondere über den Abstand zwischen einer für die Messung verwendeten Antenne und dem Tank, in dem sich das Messmediums befindet - auf den Füllstand des die Mikrowellensignale reflektierenden Mediums geschlossen werden.

Das Messsignal kann dabei als analoges oder digitales Ausgangssignal ausgegeben oder beispielsweise angezeigt werden. In der Prozessautomatisierung hat sich insbesondere die Verwendung von sogenannten 4...20 mA-Signalen verbreitet. Dabei wird über die Stromstärke des Ausgangssignals, die im Regelfall zwischen 4 mA und 20 mA liegt, die Information übertragen. Ein Fehlerfall wird bei solchen Signalen dadurch angezeigt, dass die Stromstärke außerhalb des 4 bis 20 mA-Bereichs liegt. So ist in einer Variante insbesondere die Stromstärke des Ausgangs- und damit Fehlersignals kleiner als 4 mA.

Zusätzlich zum Erkennen eines Fehlers ist es wichtig, dass die Messanordnung in einem solchen Fehlerfall diesen auch zuverlässig signalisiert.

Der Erfindung liegt daher die Aufgabe zugrunde, eine Messanordnung und ein Verfahren zum Erzeugen eines Ausgangssignals vorzuschlagen, die eine sichere Ausgabe eines Fehlersignals für das Vorliegen eines Fehlerzustands gewährleisten.

Die erfindungsgemäße Messanordnung, bei der die zuvor hergeleitete und aufgezeigte Aufgabe gelöst ist, ist zunächst und im Wesentlichen dadurch gekennzeichnet, dass eine erste Stelleinheit und eine zweite Stelleinheit vorgesehen sind. Die erste Stelleinheit und die zweite Stelleinheit sind derartig ausgestaltet und aufeinander abgestimmt, dass die erste Stelleinheit und die zweite Stelleinheit den Wert der Stromstärke des Ausgangssignals auf einen vorgebbaren Sollwert einstellen. Dabei stellt die erste Stelleinheit einen vorgebbaren festen Stromwert und die zweite Stelleinheit einen variablen Stromwert ein. Der variable Stromwert ist in einer Ausgestaltung insbesondere mindestens abhängig vom Sollwert und dem festen Stromwert.

Die erfindungsgemäße Messanordnung verfügt über zwei Stelleinheiten, die die Stromstärke des Ausgangssignals einstellen. Die zu erreichende Sollstromstärke, die entweder den Messwert darstellt oder einen Fehler signalisiert, setzt sich daher aus wenigstens zwei Komponenten zusammen - also insbesondere aus zwei unterschiedlichen Stromstärken, die sich in einer Ausgestaltung additiv zur Sollstromstärke ergänzen. Eine der beiden Teil-Stromstärken ist dabei ein fester, also konstanter und stets gleicher Wert und der anderer Teil-Stromstärkewert ist variabel und an den zu übertragenden Messwert bzw. den zu signalisierenden Fehlerzustand der Messanordnung anpassbar. So ist in einer Ausgestaltung der variable Stromwert gegeben durch die Differenz zwischen dem Sollwert der Stromstärke und dem festen Stromwert. Addieren sich die beiden eingestellten Stromwert, so ergibt sich der Sollwert der Stromstärke für das Ausgangssignal.

Da der feste Stromwert vorgebbar ist, ist in einer Ausgestaltung vorgesehen, dass der feste Stromwert einem Fehlerzustand zugeordnet ist. Das bedeutet, dass die erste Stelleinheit ständig einen solchen Strom für das Ausgangssignal einstellt, dessen Wert gleich dem eines Fehlerzustands ist. Damit wird gleichsam an den Signalausgang ständig ein Fehlersignal angelegt, das durch das Einstellen des Stroms durch die zweite Stelleinheit passend überlagert wird, um die zugeordneten Signalstromstärken des Normal- oder Regelzustands zu erhalten.

Daher ist gemäß einer Ausgestaltung eine Steuereinheit vorgesehen, die über die zweite Stelleinheit in Abhängigkeit vom Sollwert den variablen Stromwert einstellt und in dem Fall, dass in der Messanordnung ein Fehlerzustand vorliegt, die Einstellung des variablen Stromwerts durch die zweite Stelleinheit unterbricht. Die Steuereinheit ist dabei in einer Ausgestaltung mit der Sensorvorrichtung verbunden und erhält von dieser im Regelfall die Messwerte, für deren Ausgabe die Stromstärke des Ausgangssignals eingestellt wird. Diese Einstellung erfolgt dabei über die zweite Stelleinheit und den variablen Stromwert. In einer Ausgestaltung kann die Sensorvorrichtung auch ein Teil der Steuereinheit sein oder gänzlich mit ihr zu einer Einheit verschmelzen. In einer weiteren Ausgestaltung ist die zweite Stelleinheit Teil der Steuereinheit.

Unterbricht in dem Fall, dass ein Fehler in der Messanordnung vorliegt, die Steuereinheit die Einstellung der variablen Stromstärke über die zweite Stelleinheit, so ergibt sich die Stromstärke des Ausgangssignals nur durch den fixen Stromwert. Dies geschieht gleichsam automatisch und allein dadurch, dass eine Aktion - das Einstellen der variablen Stromstärke - unterlassen bzw. unterbunden wird.

Um die Einstellung der variablen Stromstärke zuverlässig zu beenden, ist in einer Ausgestaltung vorgesehen, dass die Steuereinheit in dem Fall, dass in der Messanordnung ein Fehlerzustand vorliegt, eine Energieversorgung der zweiten Stelleinheit unterbricht. Handelt es sich insbesondere um die einzige Energieversorgung der zweiten Stelleinheit, so ist - im Fehlerfall - keine Einstellung der variablen Stromstärke durch die zweite Stelleinheit mehr möglich.

Bezüglich der Anordnung der Elemente und Komponenten in der Messanordnung sind in einer Ausgestaltung die erste Stelleinheit und die zweite Stelleinheit parallel zueinander und/oder parallel zum Signalausgang angeordnet.

In einer Ausgestaltung ist vorgesehen, dass die Sensorvorrichtung der Durchflussmessung nach dem Vortex-Prinzip dient. Eine alternative Ausgestaltung sieht vor, dass der Durchfluss als Messgröße durch eine MID-Sensorvorrichtung oder nach dem Coriolis-Durchflussmessprinzip gemessen wird. Alternativ dient die Sensorvorrichtung der Füllstands- bzw. Abstandsmessung nach dem Radarprinzip. Andere Messmethoden lassen sich jedoch ebenfalls umsetzen.

Die zuvor hergeleitete und aufgezeigte Aufgabe ist nach einer weiteren Lehre der Erfindung bei dem eingangs genannten Verfahren dadurch gelöst, dass der Stromwert des Ausgangssignals auf einen vorgebbaren Sollwert gesetzt wird, indem für das Ausgangssignal mindestens ein vorgebbarer fester Stromwert und mindestens ein variabler Stromwert eingestellt wird. In einer Ausgestaltung ist der variable Stromwert abhängig vom Sollwert und dem festen Stromwert.

Die obigen Ausführungen zur Messanordnung bzw. zu dessen Ausgestaltungen gelten passend auch für das Verfahren. Umgekehrt lassen sich auch das Verfahren und dessen Ausgestaltungen unter Beachtung der folgenden Ausführungen bei der obigen Messanordnung umsetzen.

Beim erfindungsgemäßen Verfahren zur Einstellung des Ausgangssignals wird dessen Stromstärke durch mindestens zwei unterschiedliche Anteile eingestellt: ein fester und ein variabler Stromwert. Beide Stromwerte ergänzen sich zum Sollwert der Stromstärke, der den zu übertragenden Messwert bzw. den Zustand der Messanordnung signalisiert. Dabei ist der feste Stromwert stets konstant und unveränderlich, wohingegen der variable Stromwert die Anpassung an den - im Allgemeinen - auch der Änderung unterworfenen Sollwert erlaubt.

Gemäß einer Ausgestaltung wird in dem Fall, dass ein Fehlerzustand der Messanordnung vorliegt, die Einstellung des variablen Stromwerts unterbrochen. Findet keine Einstellung des variablen Stromwerts statt, so ergibt sich der Stromwert des Ausgangssignals automatisch durch den festen Stromwert. Daher wird als fester Stromwert in einer Ausgestaltung insbesondere ein solcher Wert vorgegeben, der mit dem Vorliegen eines Fehlerzustands verbunden ist, der also beispielsweise kleiner als 4 mA ist. Damit zeigt sich auch der Vorteil des Verfahrens, dass zwei Einstellungen gemeinsam den Sollwert der Stromstärke des Ausgangssignals bewirken, darin, dass das Beenden einer Einstellung automatisch dazu führt, dass die Stromstärke des Ausgangssignals durch den festen Stromwert gegeben ist. Die Signalisierung eines Fehlers wird daher beim erfindungsgemäßen Verfahren nicht durch ein aktives Einstellen eines Fehlerwerts bewirkt, sondern es wird die ergänzende Einstellung durch den variablen Stromwert unterlassen.

In einer Ausgestaltung ist insbesondere vorgesehen, dass in dem Fall, dass ein Fehlerzustand der Messanordnung vorliegt, die Einstellung des festen Stromwerts aufrechterhalten wird. Die Einstellung des festen Stromwerts wird also in dieser Ausgestaltung beim Fehlerfall im Gegensatz zur Einstellung des variablen Stromwerts nicht unterbrochen, so dass die Stromstärke des Ausgangssignals im Fehlerfall nur durch den festen Stromwert bestimmt wird.

Im Einzelnen gibt es eine Vielzahl von Möglichkeiten, die erfindungsgemäße Messanordnung auszugestalten und weiterzubilden. Dazu wird verwiesen einerseits auf die den Patentansprüchen 1 und 7 nachgeordneten Patentansprüche, andererseits auf die folgende Beschreibung von Ausführungsbeispielen in Verbindung mit der Zeichnung. In der Zeichnung zeigen
- Fig. 1: eine schematische, im Wesentlichen die funktionalen Wirkzusammenhänge anhand eines Blockschaltbilds verdeutlichende Darstellung einer erfindungsgemäßen Messanordnung und
- Fig. 2: eine schematische Darstellung einer Sensorvorrichtung zur Verwendung in einer Messanordnung gemäß der Fig. 1.

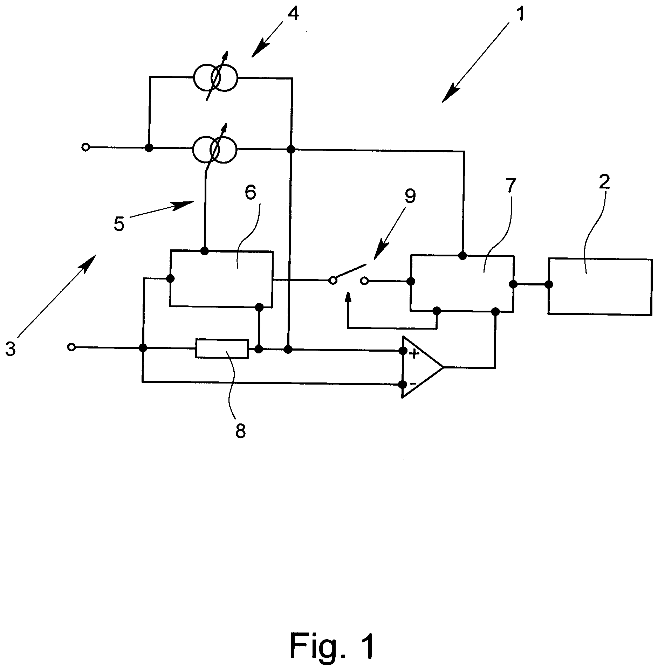

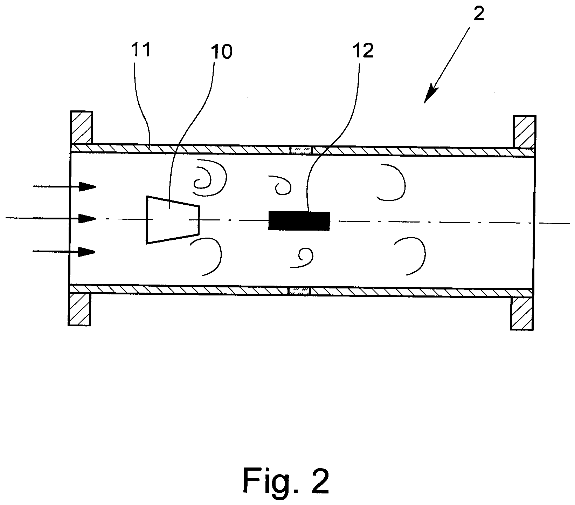

In der Fig. 1 ist ein Ausführungsbeispiel einer Messanordnung 1 dargestellt, wobei die Figur keine Darstellung im Sinne eines korrekten elektrischen Schaltplans ist, sondern vielmehr die Wirkzusammenhänge zwischen den verschiedenen Bestandteilen der Messanordnung 1 erkennbar werden lassen soll. In der Fig. 2 ist ergänzend ein Beispiel für eine Sensorvorrichtung 2 schematisiert dargestellt.

Die Fig. 1 zeigt schematisch den Aufbau einer Messanordnung 1. Für die Bestimmung einer Messgröße ist eine Sensorvorrichtung 2 vorgesehen, die beispielsweise der Durchflussmessung eines fließfähigen Mediums durch eine Rohrleitung dient.

Der ermittelte Messwert wird über einen Signalausgang 3 beispielsweise an eine - hier nicht dargestellte - Leitwarte übertragen.

Das Ausgangssignal ist dabei insbesondere ein sogenanntes 4...20 mA-Signal, wobei über die Stromstärke des Ausgangssignals eine Information über den Messwert übertragen wird. Dafür wird eine Zuordnung zwischen dem Stromstärkebereich zwischen 4 mA und 20 mA und der Spannbreite der zu erwartenden Messwerte zwischen dem kleinsten Messwert und dem größten Messwert vorgenommen. In einer Ausgestaltung werden den Messwerten die Stromstärken linear zugeordnet. Daher bedeutet eine Amplitude des Ausgangssignals von 4 mA, dass der kleinste Messwert ermittelt worden ist, und ein Ausgangssignal mit 20 mA dient der Informationsübertragung, dass der größte Messwert vorliegt.

Um das Vorliegen eines Fehlerzustands der Messanordnung 1 zu signalisieren, wird gemäß dem Stand der Technik ein Ausgangssignal mit einem Stromwert generiert, der außerhalb des Bereichs zwischen 4 mA und 20 mA liegt. So wird beispielweise ein Strom von 0 mA als Vorliegen eines Fehlers interpretiert.

Die gezeigte Messanordnung 1 erlaubt es, dass das Vorliegen eines Fehlers zuverlässig signalisiert bzw. das entsprechende Fehlersignal sicher ausgegeben wird. Insbesondere ist es möglich, ein Fehlersignal auszugeben, das sich von 0 mA unterscheidet. Der Schwerpunkt liegt dabei darauf, dass sicher der Stromwert des Ausgangssignals eingestellt wird.

Die Einstellung der Stromstärke des Ausgangssignals erfolgt in der Messanordnung 1 durch eine erste Stelleinheit 4 und eine zweite Stelleinheit 5. Die erste Stelleinheit 4 ist relativ einfach ausgeführt und stellt lediglich einen festen Stromwert I_{fix} ein. Die zweite Stelleinheit 5 verfügt über einen gesonderten Stromsteller 6, der von der Steuereinheit 7 bedient wird und dadurch auch die Vorgaben für die Einstellung des Stromwertes erhält. Die zweite Stelleinheit 5 erzeugt einen variablen Stromwert Iᵥₐᵣ.

Im normalen Betrieb wird durch die erste Stelleinheit 4 und die zweite Stelleinheit 5 für das Ausgangssignal ein Stromwert eingestellt, der als Sollwert dem von der Sensorvorrichtung 2 ermittelten Messwert entspricht. Dabei setzt sich der eingestellte Stromwert zusammen aus dem festen Anteil I_{fix}, der von der ersten Stelleinheit 4 eingestellt wird, und dem variablen Anteil Iᵥₐᵣ, der von der zweiten Stelleinheit 5 eingestellt wird. Der variable Stromwert Iᵥₐᵣ wird abhängig vom jeweiligen Messwert und vom festen Stromwert I_{fix} eingestellt.

Insgesamt ergibt sich ein Ausgangssignal mit einem Sollwert der Stromstärke als Summe aus dem festen Stromwert I_{fix} und dem variablen Stromwert Iᵥₐᵣ und gleichzeitig in Abhängigkeit vom gemessenen Messwert.

Daher ergibt sich folgender Ablauf: Aus einer Messung über die Sensorvorrichtung 2 wird ein Messwert ermittelt, dem über eine vorgebbare Zuordnung ein Sollwert der Stromstärke des Ausgangssignals zugeordnet wird. Die Einstellung der Stromstärke setzt sich aus einem unveränderlichen, festen und einem variablen Anteil zusammen. Der variable Anteil in Form des variablen Stromwerts Iᵥₐᵣ wird in der gezeigten Ausgestaltung eingestellt, indem die Differenz zwischen dem Sollwert und dem festen Stromwert I_{fix} herangezogen wird.

Der insgesamt eingestellte Stromwert des Ausgangssignals wird über einen Sens-Widerstand 8 rückgelesen und der Steuereinheit 7 zugeführt, um eine passende Korrektur über die zweite Stelleinheit 5 vorzunehmen bzw. um in einer alternativen Variante festzustellen, ob ein Fehler in dem Sinne vorliegt, dass das Ausgangssignal nicht dem Sollwert entspricht.

Wird ein Fehler erkannt oder signalisiert die Sensorvorrichtung 2, dass ein Fehler vorliegt, so unterbricht die Steuereinheit 7 den Kontakt mit dem Stromsteller 6, indem der Schalter 9 zwischen beiden geöffnet wird. In einer alternativen - nicht dargestellten - Ausgestaltung wirkt die Sensorvorrichtung 2 selbst auf den Schalter 9 ein und unterbricht im Fehlerfall (z. B. bei der Messung) die Verbindung zwischen der zweiten Stelleinheit 5 und der Steuereinheit 7.

In der gezeigten Ausgestaltung der Messanordnung 1 ist der Stromsteller 6 von der Steuereinheit 7 mit Energie versorgt, so dass eine Unterbrechung der Verbindung dazu führt, dass der Stromsteller 6 in einen Ruhezustand übergeht und damit als Teil der zweiten Stelleinheit 5 auch keinen variablen Stromwert Iᵥₐᵣ einstellt. Damit fällt Iᵥₐᵣ auf Null und die Stromstärke des Ausgangssignals wird nur durch I_{fix} bestimmt.

Da I_{fix} vorgebbar ist, wird vorzugsweise ein Wert genommen, der einem Fehlerstrom entspricht - hier insbesondere ein Wert kleiner als 4 mA.

Damit ergibt sich, dass im Fehlerfall die Stromstärke des Ausgangssignals automatisch auf den Wert des Fehlerstroms, der gleich dem festen Wert I_{fix} ist, fällt und dass dadurch auch automatisch das Vorliegen des Fehlerzustands angezeigt wird.

Die Fig. 2 zeigt als Beispiel für eine Sensorvorrichtung 2 ein Vortex-Durchflussmessgerät für fließfähige Medien (angedeutet durch die Pfeile). Das Messprinzip von solchen Messgeräten beruht darauf, dass sich in einem fließfähigen Medium hinter einem Staukörper 10, der von dem Medium in einem Messrohr 11 umströmt wird, eine sogenannte Kärmänsche Wirbelstraße ausbilden kann, die durch sich mit der Strömung fortbewegende und sich von dem Staukörper 10 ablösende Wirbel gebildet ist. Die Frequenz, mit der sich die Wirbel vom Staukörper 10 ablösen, ist von der Strömungsgeschwindigkeit abhängig, wobei der Zusammenhang unter gewissen Bedingungen nahezu linear ist. Über die Messung der Wirbelfrequenz mit einer Aufnahmeeinheit 12 kann daher die Strömungsgeschwindigkeit des Mediums bestimmt werden.

## Patentansprüche

1. Messanordnung (1) zur Bestimmung mindestens einer Messgröße mit mindestens einer Sensorvorrichtung (2) und mindestens einem Signalausgang (3) zur Ausgabe mindestens eines Ausgangssignals, wobei das Ausgangssignal mindestens durch einen vorgebbaren Wert der Stromstärke eine Information über die Messgröße und/oder einen Zustand der Messanordnung (1) überträgt, wobei die Messanordnung zur Erkennung eines Fehlerzustands mit einer Funktionalität ausgestattet ist, die der Überwachung einzelner Komponenten oder des gesamten Messgeräts dienen,
wobei eine erste Stelleinheit (4) und eine zweite Stelleinheit (5) vorgesehen sind, dass die erste Stelleinheit und (4) die zweite Stelleinheit (5) derartig ausgestaltet und aufeinander abgestimmt sind, dass die erste Stelleinheit (4) und die zweite Stelleinheit (5) den Wert der Stromstärke des Ausgangssignals auf einen vorgebbaren Sollwert einstellen, dass die erste Stelleinheit (4) einen vorgebbaren festen Stromwert einstellt und dass die zweite Stelleinheit (5) einen variablen Stromwert einstellt, wobei eine Steuereinheit (7) vorgesehen ist und die Steuereinheit (7) über die zweite Stelleinheit (5) in Abhängigkeit vom Sollwert den variablen Stromwert einstellt,
**dadurch gekennzeichnet,.**
**dass** die Steuereinheit (7) in dem Fall, dass in der Messanordnung (1) ein Fehlerzustand vorliegt, die Einstellung des variablen Stromwerts durch die zweite Stelleinheit (5) unterbricht.

2. Messanordnung (1) nach Anspruch 1, **dadurch gekennzeichnet, dass** der variable Stromwert sich aus der Differenz zwischen dem Sollwert und dem festen Stromwert ergibt.

3. Messanordnung (1) nach Anspruch 1 oder 2, **dadurch gekennzeichnet,**
**dass** der feste Stromwert einem Fehlerzustand zugeordnet ist.

4. Messanordnung (1) nach einem der Ansprüche 1 bis 3, **dadurch gekennzeichnet, dass** die Steuereinheit (7) in dem Fall, dass in der Messanordnung (1) ein Fehlerzustand vorliegt, eine Energieversorgung der zweiten Stelleinheit (5) unterbricht.

5. Messanordnung (1) nach einem der Ansprüche 1 bis 4, **dadurch gekennzeichnet, dass** die erste Stelleinheit (4) und die zweite Stelleinheit (5) parallel zueinander und/oder parallel zum Signalausgang (3) angeordnet sind.

6. Messanordnung (1) nach einem der Ansprüche 1 bis 5, **dadurch gekennzeichnet, dass** die Sensorvorrichtung (2) der Durchflussmessung nach dem Vortex-Prinzip dient.

7. Verfahren zur Erzeugung eines Ausgangssignals, wobei mindestens durch einen Wert der Stromstärke des Ausgangssignals mindestens eine Information über eine Messgröße und/oder einen Zustand einer Messanordnung (1) übertragen wird, wobei der Stromwert des Ausgangssignals auf einen vorgebbaren Sollwert gesetzt wird, indem für das Ausgangssignal mindestens ein vorgebbarer fester Stromwert und mindestens ein variabler Stromwert eingestellt wird,
**dadurch gekennzeichnet,**
**dass** in dem Fall, dass ein Fehlerzustand der Messanordnung (1) vorliegt, die Einstellung des variablen Stromwerts unterbrochen wird.

8. Verfahren nach Anspruch 7, **dadurch gekennzeichnet, dass** in dem Fall, dass ein Fehlerzustand der Messanordnung (1) vorliegt, die Einstellung des festen Stromwerts aufrechterhalten wird.

## Claims

1. Measuring arrangement (1) for determining at least one measured variable, comprising at least one sensor device (2), at least one signal output (3) for outputting at least one output signal, wherein the output signal transmits information about a measured variable and/or a state of the measuring arrangement (1) using at least one predetermined value of current, wherein the measuring arrangement is equipped with a functionality for recognizing an error state, which is used for monitoring individual components or the entire measuring device,
wherein a first adjusting unit (4), and a second adjusting unit (5) are provided, that the first adjusting unit (4) and the second adjusting unit (5) are configured and attuned to one another so that the first adjusting unit (4) and the second adjusting unit (5) set the value of the current of the output signal to a predetermined desired value, that the first adjusting unit (4) sets a predetermined fixed current value, and the second adjusting unit (5) sets a variable current value, wherein a control unit (7) is provided and the control unit (7) is set via the second adjusting unit (5) depending on the desired value of the variable current value,
**characterized in**
**that** the control unit (7), in the case that there is an error condition in the measuring arrangement (1), interrupts power supply to the second adjusting unit (5).

2. Measuring arrangement (1) according to claim 1, **characterized in that** the variable current value is obtained from a difference between the desired value and the fixed current value.

3. Measuring arrangement (1) according to claim 1 or 2, **characterized in**
**that** the fixed current value is associated with an error condition.

4. Measuring arrangement (1) according to any one of claims 1 to 3, **characterized in that** the control unit (7), in the event that there is an error condition in the measuring arrangement (1), interrupts power supply to the second adjusting unit (5).

5. Measuring arrangement (1) according to any one of claims 1 to 4, **characterized in that** the first adjusting unit (4) and the second adjusting unit (5) are at least parallel to one another and/or parallel to the signal output (3).

6. Measuring arrangement (1) according to any one of claims 1 to 5, **characterized in that** the sensor device (2) is a vortex flow measurement sensor device.

7. Method for producing an output signal, wherein at least one piece of information about a measured variable and/or a state of a measuring arrangement (1) is transmitted, wherein the value of a current of the output signal is set to a predetermined desired value in that at least one predeterminable fixed current value and at least one variable current value are set for the output signal,
**characterized in**
**that**, in the event that there is an error condition of the measuring arrangement (1), setting of the variable current value is interrupted.

8. Method according to claim 7, **characterized in that**, in the event that there is an error condition of the measuring arrangement (1), setting of the fixed current value is maintained.

## Revendications

1. Système de mesure (1) pour la détermination d'au moins une grandeur de mesure, comportant au moins un dispositif à capteur (2) et au moins une sortie de signal (3) destinée à délivrer au moins un signal de sortie, dans lequel le signal de sortie transmet une information concernant la grandeur de mesure et/ou un état du système de mesure (1) au moins par l'intermédiaire d'une valeur pouvant être prédéterminée de l'intensité du courant, dans lequel le système de mesure est conçu pour identifier un état de défaut au moyen d'une fonctionnalité qui permet de surveiller des composants individuels ou la totalité de l'appareil de mesure,
dans lequel il est prévu une première unité de réglage (4) et une deuxième unité de réglage (5), la première unité de réglage (4) et la deuxième unité de réglage (5) étant conçues et adaptées l'une à l'autre de manière à ce que la première unité de réglage (4) et la deuxième unité de réglage (5) règlent la valeur de l'intension de courant du signal de sortie à une valeur nominale pouvant être prédéterminée, à ce que la première unité de réglage (4) règle une valeur de courant fixe pouvant être prédéterminée et à ce que la deuxième unité de réglage (5) règle une valeur de courant variable, dans lequel il est prévu une unité de commande (7) et l'unité de commande (7) règle la valeur de courant variable par l'intermédiaire de la deuxième unité de réglage (5) en fonction de la valeur nominale,
**caractérisé en ce que** l'unité de commande (7) interrompt le réglage de la valeur de courant variable par l'intermédiaire de la deuxième unité de réglage (5) dans le cas où un état de défaut est présent dans le système de mesure (1).

2. Système de mesure (1) selon la revendication 1,
**caractérisé en ce que** la valeur de courant variable résulte de la différence entre la valeur nominale et la valeur de courant fixe.

3. Système de mesure (1) selon la revendication 1 ou 2, **caractérisé en ce qu'**un état de défaut est associé à la valeur de courant fixe.

4. Système de mesure (1) selon l'une quelconque des revendications 1 à 3, **caractérisé en ce que** l'unité de commande (7) interrompt une alimentation en énergie de la deuxième unité de réglage (5) dans le cas où un état de défaut est présent dans le système de mesure (1).

5. Système de mesure (1) selon l'une quelconque des revendications 1 à 4, **caractérisé en ce que** la première unité de réglage (4) et la deuxième unité de réglage (5) sont disposées en parallèle l'une à l'autre et/ou en parallèle à la sortie de signal (3).

6. Système de mesure (1) selon l'une quelconque des revendications 1 à 5, **caractérisé en ce que** le dispositif à capteur (2) permet d'effectuer une mesure de débit conformément au principe du vortex.

7. Procédé pour générer un signal de sortie, dans lequel au moins une information concernant une grandeur de mesure et/ou un état du système de mesure (1) est transmise au moins par l'intermédiaire d'une valeur d'intensité de courant du signal de sortie, dans lequel la valeur de courant du signal de sortie est fixée à une valeur nominale pouvant être prédéterminée en réglant au moins une valeur de courant fixe pouvant être prédéterminée et au moins une valeur de courant variable pour le signal de sortie,
**caractérisé en ce que**, dans le cas où un état de défaut est présent dans le système de mesure (1), le réglage de la valeur de courant variable est interrompu.

8. Procédé selon la revendication 7, **caractérisé en ce que**, dans le cas où un état de défaut est présent dans le system de mesure (1), le réglage de la valeur de courant fixe est poursuivi.
